# NEUE EUROPÄISCHE PATENTSCHRIFT

(11) **EP 3 398 698 B2**
(45) Veröffentlichungstag und Bekanntmachung des Hinweises auf die Entscheidung über den Einspruch: **28.08.2024**
(45) Hinweis auf die Patenterteilung: 07.08.2019
(21) Anmeldenummer: 17169758.4
(22) Anmeldetag: 05.05.2017
(51) Int. Cl.: B21D 22/16, B21D 31/00

(54) **VERFAHREN UND VORRICHTUNG ZUM INKREMENTELLEN UMFORMEN EINES METALLISCHEN WERKSTÜCKS**
DEVICE AND METHOD FOR INCREMENTAL REFORMING OF A METALLIC WORKPIECE
PROCÉDÉ ET DISPOSITIF DE FAÇONNAGE INCRÉMENTIEL D'UNE PIÈCE USINÉE MÉTALLIQUE

(43) Veröffentlichungstag der Anmeldung: 07.11.2018
(73) Patentinhaber: Leifeld Metal Spinning GmbH, 59229 Ahlen (DE)
(72) Erfinder: NILLIES, Benedikt, 59227 Ahlen (DE)
(74) Vertreter: Wunderlich & Heim Patentanwälte PartG mbB

(56) Entgegenhaltungen:
- DE-U1- 20 122 011
- JP-A- S5 961 529
- JP-A- S57 182 161

## Beschreibung

Die Erfindung betrifft ein Verfahren zum inkrementellen Umformen eines metallischen Werkstücks, mit mindestens einer Spindel, an welcher das Werkstück eingespannt wird, und mindestens einem Spindelantrieb, mit welchem die mindestens eine Spindel mit dem Werkstück und/oder mindestens einer Umformrolle relativ zum Werkstück in Rotation versetzt wird, wobei die mindestens eine Umformrolle mittels mindestens eines Stellantriebes radial und/oder axial relativ an das rotierende Werkstück zugestellt wird (siehe z.B. DE-U-20122011).

Die Erfindung betrifft weiterhin eine Vorrichtung zum inkrementellen Umformen eines metallischen Werkstücks, mit mindestens einer Spindel, an welcher das Werkstück einspannbar ist, und mindestens einem Spindelantrieb, mit welchem die mindestens eine Spindel mit dem Werkstück und/oder mindestens eine Umformrolle relativ zum Werkstück in Rotation versetzbar ist, wobei die mindestens eine Umformrolle mittels mindestens eines Stellantriebes radial und/oder axial relativ an das rotierende Werkstück zustellbar ist (siehe ebenfalls DE-U-20122011).

Vorrichtungen zum inkrementellen Umformen sind als sogenannte Drück-, Profilier-, Einzieh- und Drückwalzmaschinen seit Jahrzehnten bekannt. Diese werden üblicherweise mit einer computergestützten Steuerung, beispielsweise einer CNC-Steuerung oder einer sogenannten Teach-in-Steuerung ausgestattet.

Mit diesen Maschinen kann ein spanloses Umformen eines in Rotation versetzten Werkstücks erfolgen. Insbesondere bei einem Drückwalzen komplexer Werkstück kann die Auslegung des Umformverfahrens, also etwa die Einstellung der Drehzahl, der Zustellwege und der Zustellkräfte, große Erfahrung des Maschinenbedieners oder eines Maschinenprogrammierers erfordern. Denn bereits kleine Änderungen von Verfahrensparametern können aufgrund des komplexen Umformverhaltens des Metalls beim Umformen, insbesondere der sich beim Umformen ändernden Festigkeit des Werkstückmaterials sowie des sich verändernden Rückstellverhaltens des umzuformenden Materials, zu merklichen Änderungen am Endprodukt führen. Auch eventuelle kleine Materialänderungen beim Ausgangswerkstück können dazu führen, dass der Prozess insgesamt oder zumindest einzelne Maschinenparameter neu eingestellt und angepasst werden müssen. Dies ist arbeits- und zeitaufwändig und bedarf eines bei der spanlosen Umformung erfahrenen Spezialisten. Eine fehlende oder nicht erfolgte Prozessanpassung durch kann, z.B. bei geänderter Materialcharge, zudem zu einer erhöhten Ausschussquote führen.

Der Erfindung liegt die **Aufgabe** zugrunde, ein Verfahren und eine Vorrichtung zum inkrementellen Umformen eines metallischen Werkstücks anzugeben, mit welchen Werkstücke besonders effizient und flexibel herstellbar sind.

Die Aufgabe wird zum einen durch ein Verfahren mit den Merkmalen des Anspruchs 1 und zum anderen mit einer Vorrichtung gemäß den Merkmalen des Anspruchs 14 gelöst. Bevorzugte Ausführungsformen sind in den abhängigen Ansprüchen angegeben.

Das erfindungsgemäße Verfahren ist dadurch gekennzeichnet, dass eine computer-basierte Steuerung vorgesehen ist, welche über Sensoren mehrere Maschinenparameter erfasst, welche mindestens eine Drehzahl der Spindel, eine Position der Umformrolle sowie Umformkräfte und/oder eine Zustellgeschwindigkeit der Umformrolle umfassen, dass durch die Steuerung weiterhin Prozessparameter und/oder Werkstückparameter erfasst werden und dass die Steuerung einen Datensatz erstellt, bei dem die Maschinenparameter den Prozess- und/oder Werkstückparametern zugeordnet werden.

Eine Grundidee der Erfindung kann darin gesehen werden, bei einem Verfahren und einer Maschine zum inkrementellen Umformen sowohl Maschinenparameter als auch Prozess- und/oder Werkstückparameter zu erfassen und diese zu einem Datensatz zusammenzufassen. Es wird sozusagen ein Datensatz erstellt, bei welchem unmittelbar Ursache und Wirkung einander zugeordnet sind. Dabei bezeichnen die Maschinenparameter im Wesentlichen die vorhandenen Einstellmöglichkeiten einer Maschine, insbesondere einer Drückwalzmaschine. Die Prozessparameter bezeichnen dabei insbesondere Parameter, welche sich als Ergebnis der Maschineparameter am Werkstück einstellen, also insbesondere Form- oder Festigkeitsänderungen. Darüber hinaus können diese Parameter auch als sogenannte Werkstückparameter Materialeigenschaften umfassen, welche in die Steuerung eingegeben werden, insbesondere die Art und Qualität des umzuformenden Materials.

Die entsprechenden Datensätze können vorzugsweise zeitabhängig oder wegabhängig erfasst und zu entsprechenden Datensätzen oder Datenstrings zusammengesetzt und gespeichert werden.

Derartige Datensätze ermöglichen nicht nur eine besondere Art der Qualitätssicherung und Prozessüberwachung, sondern erlauben auch eine Verfahrensverbesserung oder Verfahrensoptimierung, um beispielsweise eine vorgegebene Endkontur eines endbearbeitenden Werkstücks zu erreichen.

Eine bevorzugte Ausführungsvariante des erfindungsgemäßen Verfahrens besteht darin, dass als Prozessparameter die Bearbeitungszeit, die Umformzeit, ein Energieverbrauch, Prozesskräfte, eine Temperatur und/oder ein Verschleiß erfasst werden. Zu diesem Zweck kann die Maschine mit entsprechenden Sensoren zur Zeiterfassung, Energieverbrauchserfassung, Kraftermittlung beziehungsweise der Temperatur versehen sein. Aus mehreren dieser so erfassten Werte kann auch ein Rückschluss auf den Maschinenverschleiß errechnet oder zumindest abgeschätzt werden. Die Sensoren können insbesondere an den Umformrollen und/oder der Führung und/oder Vorschubantrieben und/oder der Spindel und/oder den entsprechenden Antriebs- oder Lagerkomponenten vorgesehen sein.

Nach einer weiteren Verfahrensvariante der Erfindung ist es bevorzugt, dass als Werkstückparameter Dimensionen und/oder Toleranzen des Werkstücks vor, während und/oder nach der Bearbeitung erfasst werden. Die Erfassung der Werkstückdimensionen kann optisch, taktil oder in einer sonstigen geeigneten Weise durch entsprechende Mess- oder Erfassungseinrichtungen erfolgen. Besonders zweckmäßig ist es, dass eine Dimensionsänderung kontinuierlich oder zu diskreten Zeitpunkten während der Werkstückbearbeitung erfasst wird. Grundsätzlich ist aber auch eine einfache Erfassung nach Abschluss der Bearbeitung möglich, etwa bei einfach ausgebildeten Werkstücken. Insbesondere bei einer vorausgegangenen Erfassung des Ausgangswerkstücks kann so die erfolgte Umformung indirekt bestimmt und als Ergebnis der entsprechenden Maschinenparameter zugeordnet werden. Insbesondere bei Datensätzen mit unterschiedlichen Maschinenparametern können so Aussagen zu einer Verbesserung des Verfahrensablaufes und zu einer Verfahrensoptimierung getroffen werden.

Besonders vorteilhaft ist es nach einer Weiterbildung der Erfindung, dass anhand des ermittelten Datensatzes ein Wert zur Umformbarkeit des Materiales beziehungsweise dem Materialfließverhalten des Werkstücks bestimmt wird. So kann etwa durch Zuordnung einer bestimmten Umformkraft oder eines bestimmten Zustellweges der mindestens einen Umformrolle an das Werkstück im Vergleich mit den sich daraus ergebenden Umformergebnis am Werkstück eine Aussage getroffen werden, welche Umformeigenschaft das Material des zu bearbeitenden Werkstücks besitzt. So kann eine Aussage über die Umformfestigkeit sowie über ein plastisches und elastisches Materialverhalten getroffen werden. Beispielsweise ist es denkbar, dass bei einem Ausgangswerkstück aus einem nicht näher bekannten Material zunächst ein definierter kleiner Umformschritt bei vorgegebenen Maschinenparametern, etwa einem vorgegebenem Umformweg und/oder einer vorgegebenen Umformkraft, durchgeführt wird, um dann die hierdurch hervorgerufene Formänderung am Werkstück zu erfassen. Durch eine Zuordnung und in einen Bezug setzen der Maschinenparameter zu der erzielten Formänderung kann durch eine Steuereinrichtung anhand von hinterlegten Daten in einem Speicher eine Materialbestimmung erfolgen, insbesondere ob es sich etwa um einen leicht umzuformenden Umformstahl oder um eine höherfestige Stahlqualität handelt. Abhängig von dieser Materialbestimmung können dann für das weitere Umformen durch die Steuereinrichtung die weiteren Maschinenparameter entsprechend angepasst werden, um eine ebenfalls in der Steuerung hinterlegte gewünschte Endkontur des Werkstücks zu erreichen.

Dabei ist es besonders vorteilhaft, dass der Datensatz mit in einem Speicher hinterlegten Datensätzen verglichen wird. Die Datensätze können dabei in dem Speicher anfänglich hinterlegt oder per Datenfernübertragung von einer Zentrale eingespeist werden. Weiter ist es möglich, dass durch die Umformvorrichtung selbst Datensätze erzeugt und in dem maschineneigenen Datenspeicher hinterlegt werden. Diese können gegebenenfalls ebenfalls von einer Zentrale abgefragt und per Datenfernübertragung weitergeleitet werden. Vorzugsweise ist die Vorrichtung mit einem Internetzugang versehen, so dass dieser zur Datenübertragung und insbesondere zu einem langfristigen Datenaustausch verwendet werden kann.

Eine vorteilhafte Weiterbildung des erfindungsgemäßen Verfahrens besteht darin, dass die Steuerung anhand eines hinterlegten und ausgewählten Datensatzes einen oder mehrere Parameter bei der durchzuführenden Umformung verändert. In der Steuerung kann insbesondere ein Programm oder eine Logik hinterlegt sein, welche eine oder mehrere Maschinenparameter bei der durchzuführenden Umformung oder bei einem nachfolgenden Umformprozess an einem weiteren Werkstück verändert und anpasst. Dabei kann von einem Maschinenbediener oder einer Zentrale vorgegeben sein, dass eine Anpassung der Datensätze unter vorauswählbaren Gesichtspunkten erfolgt.

Dabei ist es nach einer Weiterbildung der Erfindung besonders bevorzugt, dass durch die Steuerung eine Optimierung unter ökonomischen Gesichtspunkten, hinsichtlich Werkstücktoleranzen, Materialeigenschaften, Bearbeitungszeit, Energieverbrauch und/oder Verschleiß angestrebt wird. So kann etwa durch einen Maschinenbediener oder eine Zentrale vorgegeben werden, eine möglichst kurze Bearbeitungszeit vorzusehen. Hierdurch kann der Ausstoß der Maschine etwa bei Auftragsspitzen erhöht werden. Alternativ oder ergänzend kann eine Bearbeitung unter dem Gesichtspunkt des möglichst geringen Energieverbrauches oder eines möglichst geringen Maschinenverschleißes erfolgen. In diesen Fällen kann sich eine etwas erhöhte Bearbeitungszeit je Werkstück ergeben. Entsprechendes kann sich auch dann einstellen, wenn eine Maschinensteuerung unter dem Gesichtspunkt der hohen Formgenauigkeit, also bei möglichst geringen Werkstücktoleranzen, durchgeführt wird. Es kann auch eine Kombination der verschiedenen Gesichtspunkte erfolgen, um etwa eine unter Maschinenauslastung, Energieverbrauch und Maschinenverschleiß möglichst effiziente Bearbeitung zu erzielen.

Nach der Erfindung ist vorgesehen, dass die Parameter weg- und/oder zeitabhängig erfasst werden. Während der Bearbeitung können so eine Vielzahl von Datensätzen erfasst werden, welche eine zeitliche oder streckenabhängige Dokumentation und Zuordnung des Verfahrensablaufes ermöglichen.

Nach der Erfindung wird weiterhin eine vorteilhafte Verfahrensvariante dadurch erzielte, dass durch den Bediener, durch einen Datensatz und/oder durch die Steuerung für die Parameter minimale und/oder maximale Grenzwerte festgelegt werden, wobei die inkrementale Umformung durch die Steuerung so gesteuert wird, dass die vorgegebenen Grenzwerte nicht überschritten werden. Durch diese vorgegebenen Grenzwerte kann beispielsweise eine Überbelastung der Maschine und/oder von Maschinenkomponenten verhindert werden.

Eine weitere bevorzugte Verfahrensvariante der Erfindung besteht darin, dass die Parameter zu einer Prozessoptimierung innerhalb der vorgegebenen Grenzwerte durch die Steuerung abgewandelt werden. Die Steuerung kann dabei so ausgelegt sein, dass stets einzelne Maschinenparameter insbesondere innerhalb der vorgegebenen Grenzwerte bei der Bearbeitung einzelner Werkstücke abgewandelt werden. Durch die Zuordnung und Verknüpfung mit den Werkstückparametern kann durch die Steuerung festgestellt werden, ob sich eine Verbesserung oder eine Verschlechterung hinsichtlich eines gewünschten Verfahrensergebnisses eingestellt hat. Unter Berücksichtigung dieses Ergebnisses kann dann die Steuerung eine weitere Veränderung oder gegebenenfalls eine Rücknahme der Veränderung des mindestens einen Maschinenparameters vornehmen. Es wird so ein Lernprozess der Steuerung erreicht, so dass über die Zeit und mit der Anzahl der bearbeiteten Werkstücke eine allgemeine Verbesserung und Prozessoptimierung erreicht werden kann.

Dabei ist es insbesondere besonders vorteilhaft, dass neu ermittelte Datensätze der Prozessoptimierung in einem Speicher der Steuerung hinterlegt werden. Wird also ein Datensatz als besonders vorteilhaft für die Werkstückbearbeitung, von z.B. einem speziellen Werkstoff oder einen bestimmten Bauteil, unter einem oder mehreren Gesichtspunkten angesehen, so kann dieser Datensatz für zukünftige Bearbeitungen hinterlegt werden. Gleichzeitig kann dieser Datensatz einer Zentrale im Unternehmen und/oder des Maschinenherstellers zur Abfrage und allgemeinen Prozessdatenauswertung zur Verfügung stehen.

Nach einer Weiterbildung des erfindungsgemäßen Verfahrens ist es bevorzugt, dass die Steuerung geänderte Prozessabläufe ermittelt und diese einem Nutzer vorschlägt oder automatisch einsetzt. Eine Prozessoptimierung kann so vollautomatisch oder noch gesteuert durch den Maschinenbediener erfolgen.

Ein besonders effizienter Betrieb einer Maschine wird nach der Erfindung dadurch erreicht, dass durch die Steuerung Verschleißzustände ermittelt und prognostiziert werden und dass die Steuerung Wartungstermine vorschlägt und/oder vorgibt. Hierdurch können Wartungstermine bedarfsgerecht festgesetzt werden, was kosteneffizient ist und die Lebenszeit einer Maschine und der Maschinenkomponenten verlängert. Verschleißzustände und Wartungstermine können nicht nur unmittelbar an der Maschine sondern über Datenfernübertragung auch zu einer Betriebszentrale und/oder dem Maschinenhersteller oder einer Servicestelle des Maschinenherstellers zugeleitet werden. Es kann so alles Notwendige veranlasst werden, beispielsweise auch die Beschaffung von Ersatzteilen. Durch eine rechtzeitige Wartung können unerwartete Betriebsausfälle der Maschine weitgehend verhindert werden.

Eine weitere bevorzugte Verfahrensvariante besteht darin, dass die Maschinenparameter in einer ersten Steuerung überwacht werden und dass mindestens eine weitere Steuerung die Überwachung von weiteren Maschinen- und/oder Verfahrensparametern übernimmt, diese auswertet und Stellgrößen an die erste Steuerung zur Änderung der Maschinenparameter beziehungsweise zur Optimierung des Prozesses übermittelt. Eine erfindungsgemäße Maschine kann vorzugsweise mit zwei oder mehreren Steuerungen oder Steuereinheiten versehen sein, welche unterschiedliche Funktionen wahrnehmen. So ist die erste Steuerung maßgeblich für die eigentliche Maschinensteuerung vorgesehen, während die zweite Steuereinheit die Aufgabe der Prozessoptimierung übernimmt.

Die Erfindung betrifft weiterhin auch eine Vorrichtung zum inkrementellen Umformen eines metallischen Werkstücks, welche dadurch gekennzeichnet ist, dass eine computer-basierte Steuerung vorgesehen ist, welche über Sensoren mehrere Maschinenparameter erfasst, welche mindestens eine Drehzahl der Spindel, eine Position der Umformrolle sowie Umformkräfte und/oder eine Zustellgeschwindigkeit der Umformrolle umfasst, dass durch die Steuerung weiterhin Prozessparameter und/oder Werkstückparameter erfassbar sind und dass die Steuerung zum Erstellen eines Datensatzes ausgebildet ist, bei dem die Maschinenparameter den Prozess- und/oder Werkstückparametern zugeordnet werden.

Die erfindungsgemäße Vorrichtung ist insbesondere zur Durchführung des zuvor beschriebenen Verfahrens geeignet und vorgesehen. Hiermit können die zuvor beschriebenen Vorteile erreicht werden.

Die erfindungsgemäße Vorrichtung zur inkrementellen Umformung, zum Beispiel durch Drücken, Profilieren, Verdicken, Anstauchen, Naben Anschieben und Einziehen oder Drückwalzen rotationssymmetrischer Werkstücke, verfügt über eine Software und eine Hardware, die vorzugsweise Betriebszustände, Prozesszustände und Maschinenzustände erfasst und dahingehend analysiert, wie es für einen sicheren Betrieb, einen sicheren Prozess oder die produktionssichere Maschine und die Qualität des Werkstücks erforderlich ist. Die mit der Software versehene Steuerung kann vorzugsweise über eine gewisse Intelligenz verfügen, die eine automatisierte und selbstständige Optimierung im laufenden Prozess ermöglicht. Optimierungspotenzial besteht beispielsweise hinsichtlich Genauigkeit und Qualität des Werkstücks, Ressourceneinsatz, Materialeinsatz, Energieverbrauch, Maschinen- und Prozesskosten, Auslastung der Produktion, Werkzeugverschleiß oder Werkzeugstandzeiten sowie Wartungs- und Instandhaltungskosten. Die Intelligenz der Maschine kann vorzugsweise soweit gehen, dass vollautomatisch Drückprogramme erzeugt werden, die dem Materialfließverhalten über die Anzahl und Form der Drückstufen in optimaler Weise Rechnung tragen. Dabei wird beispielsweise das Fließverhalten in Echtzeit bei dem Umformverfahren ermittelt und die Umformstufe automatisch simuliert und angepasst. Damit könnte ein Umformverfahren, insbesondere ein Drück- oder Drückwalzprozess, zukünftig weniger vom Geschick des Maschinenbedieners, sondern maßgeblich von der Qualität der Steuerungssoftware und ihrer Hardware abhängig sein. Die vorgesehene Sensorik ermöglicht es vorzugsweise, die Qualität des Umformverfahrens in Echtzeit zu überprüfen. So können beispielsweise im laufenden Verfahren über Hallsensoren die Anlage des Materials beim Drückvorgang unterhalb des Rolleneingriffs beziehungsweise der Drückzone geprüft werden.

Die Software kann mittels der Sensorik zudem Daten und Informationen sammeln, die völlig neue Möglichkeiten eröffnen. So können beispielsweise Informationen über den Verschleißzustand der Maschine genutzt werden, um dem Maschinennutzers gezielt Serviceeinsätze anzubieten.

Eine weitere bevorzugte Variante der Software und Sensorik ermöglicht, die Überwachung der Qualität des umzuformenden Werkstücks sowie des Endwerkstücks. Beispielsweise können die Umformkräfte weg- und/oder zeitabhängig mitgeschrieben werden, wobei sich diese vorzugsweise innerhalb eines zuvor fest definierten minimalen und maximalen Grenzwerts befinden. Die Grenzwerte können für bestimmte Punkte oder ganze Bereiche definiert werden, so dass Hüllkurven oder Fenster die Grenzwerte beschreiben. Die Definition dieser Hüllkurven kann empirisch erfolgen, vorzugsweise jedoch über eine intelligente Softwareroutine automatisch. Dazu kann beispielsweise die Idealkurve je Prozess aufgezeichnet und Hüllkurven in vorgegebenen Abständen definiert werden. Diese können im Idealfall auch in Teilbereichen abweichend mit höherer Genauigkeit/geringerer Toleranz erstellt werden. Vorzugsweise sind die Hüllkurven einfach grafisch editierbar, so dass eine schnelle gezielte Anpassung in Teilbereichen erfolgen kann.

Abhängigkeiten von Grenzwerten können zuvor definiert und/oder durch die Software ermittelt werden. Auch ist eine ein- bis mehrdimensionale grafische Darstellung der Einzel- und/oder Gesamtergebnisse auf einem Bildschirm und/oder anderen Ausgabegeräten möglich. Bei Überschreiten der Grenzwerte kann ein automatisches Signal erfolgen und/oder durch die Steuerung automatisch Maßnahmen eingeleitet werden. Dies kann vorzugsweise soweit gehen, dass die Vorrichtung aktiv in den Prozess eingreift, Parameter verändert oder der Prozess insgesamt gestoppt wird. Daran kann sich eine automatische Benachrichtigung von Personen, Computern oder anderen Maschinen in der Fertigung anschließen.

Die Grenzwerte erlauben dann eine Aussage über die Qualität des Bauteils oder des Verfahrens. Über die Auswertung der Umformkräfte hinaus können der Verschleiß der Umformrollen durch Messsensoren, der Verschleiß des Drückwerkzeuges über die Abstreif- oder Abschiebekräfte, die Produktschmierung über Durchflusskontrollen der Kühlmittelzufuhr, die Lebensdauer der Hauptspindel- und Rollenwellenlagerungen durch Hall-/Vibrationssensoren überwacht werden. Verschleiß oder Maschinenverlagerungen durch Wärme können durch Sensorik und CNC-Steuerung automatisch kompensiert werden. Durch das Überwachen aller Sensoren beziehungsweise der vordefinierten Parameter wird dann folglich ein Gutteil sicher hergestellt. Der Einsatz der Sensorik kann so weit gehen, dass eine zusätzliche Qualitätssicherung an der Maschine entfallen kann. Dies kann erhebliche Kosten sparen sowie unnötige Maschinenstillstandszeiten und Ausschussmaterial verhindern und insgesamt eine Fehlerursache bei Qualitätsabweichungen erleichtern.

Die gemessenen Daten können für die Beurteilung des Prozesses herangezogen, gespeichert und archiviert werden, so dass eine Rückverfolgbarkeit, wie sie beispielsweise für die Fahrzeug-, Luft- und/oder Raumfahrtindustrie gewünscht ist, gewährleistet wird.

Darüber hinaus kann die Software Daten an Dritte zur weiteren Analyse zur Verfügung stellen, so dass zukünftige Maschinen und Prozesse besser optimiert werden können und/oder die Konstruktion und Entwicklung zukünftiger Maschinen und Vorrichtungen verbessert werden kann. Beispielsweise lassen sich über die Aufzeichnung von Kräften und Leistungen eine gewisse Anzahl von Maschinen auf eine Durchschnittsbelastung, eine Maximalbelastung und/oder ein Belastungskollektiv schließen, so dass bei Weiterentwicklungen der Maschinen eine Kalkulationsbasis für die Errechnung der Lebensdauer vorhanden ist, etwa von Lagern, Führungen sowie Antrieben. Darüber hinaus lassen sich die Vorrichtungen beziehungsweise Maschinen sowie ihre Konstruktion gezielter auf Kundenbedürfnisse anpassen und damit Produktionskosten sparen.

Ferner helfen die so erfassten Daten beziehungsweise Datensätze, die theoretische Simulation mit der Praxis abzugleichen. Durch systematische Aufzeichnung lässt sich auch eine Wissensdatenbank aufbauen, welche Maschinennutzern und Kunden als ein zusätzlicher Service zur Verfügung gestellt werden kann.

Eine weitere Ausführungsvariante des erfindungsgemäßen Verfahrens besteht darin, dass die automatische Prozessoptimierung durch die Maschinensteuerung eine nachfolgende manuelle Qualitätssicherung überflüssig macht. Somit kann die automatische Prozessoptimierung durch die Steuerung eine üblicherweise vorgesehene Qualitätsüberprüfung durch Bedienpersonal ersetzen. Abweichungen im Prozess können bereits frühzeitig erkannt und durch entsprechende Änderung und Anpassung der Maschinenparameter ausgeglichen oder behoben werden.

Eine besonders umfassende Datensatzerstellung wird nach einer Weiterbildung des erfindungsgemäßen Verfahrens dadurch erreicht, dass das Werkstück, die mindestens eine Umformrolle, ein Werkzeug und/oder weitere Vorrichtungskomponenten mit einer Kodierung und/oder einem Datenspeicher versehen sind, deren Information gelesen und dem ermittelten Datensatz zugeordnet werden. Das Auslesen kann über entsprechende Sensoren oder Leseeinrichtungen unmittelbar an der Maschine oder durch getrennte Einrichtungen oder durch einen Maschinenbediener erfolgen.

Damit die ermittelten Datensätze eine direkte Zuordnung zum umgeformten Bauteil ermöglichen, kann das Werkstück selbst mit einer Kodierung und/oder einem Datenspeicher ausgestattet sein. Hierzu eignen sich im besonderen Barcodes, QR-Codes oder RFID-Chips. RFID-Chips ermöglichen die Speicherung einer Vielzahl von Daten über die Herstellung und/oder den Herstellungsprozess und die erzielte Qualität. Derartige Codes, Speicher oder Chips lassen sich vorzugsweise bereits in/am Rohmaterial einbringen/befestigen.

Auch können Umformrollen und/oder Werkzeuge und /oder Maschinenkomponenten mit derartigen Speichern ausgestattet sein, die vorzugsweise Informationen über Original-Beschaffenheit und Verschleißzustand enthalten. Durch die Maschinensteuerung können die Informationen vorzugsweise eingesehen bzw. ausgelesen und/oder überschrieben werden, so dass Fehler im Prozess, wie z.B. der Aufbau einer falschen Umformrolle, ausgeschlossen werden.

## Patentansprüche

1. Verfahren zum inkrementellen Umformen eines metallischen Werkstücks, mit
- mindestens einer Spindel, an welcher das Werkstück eingespannt wird, und
- mindestens einem Spindelantrieb, mit welchem die mindestens eine Spindel mit dem Werkstück und/oder mindestens einer Umformrolle relativ zum Werkstück in Rotation versetzt wird,
- wobei die mindestens eine Umformrolle mittels mindestens eines Stellantriebes radial und/oder axial relativ an das rotierende Werkstück zugestellt wird,
bei welchem
- eine computer-basierte Steuerung vorgesehen ist, welche über Sensoren mehrere Maschinenparameter erfasst, welche mindestens eine Drehzahl der Spindel, eine Position der Umformrolle sowie Umformkräfte und/oder eine Zustellgeschwindigkeit der Umformrolle umfassen,
wobei
- durch die Steuerung weiterhin Prozessparameter und/oder Werkstückparameter erfasst werden,
- die Parameter weg- und/oder zeitabhängig erfasst werden,
- die Steuerung mindestens einen Datensatz erstellt, bei dem die Maschinenparameter den Prozess- und/oder Werkstückparametern zugeordnet werden,
- durch die Steuerung Verschleißzustände ermittelt und prognostiziert werden und
- die Steuerung Wartungstermine vorschlägt und/oder vorgibt.

2. Verfahren nach Anspruch 1,
**dadurch gekennzeichnet,**
**dass** als Prozessparameter die Bearbeitungszeit, die Umformzeit, ein Energieverbrauch, eine Prozesskraft, eine Temperatur und/oder ein Verschleiß erfasst werden.

3. Verfahren nach Anspruch 1 oder 2,
**dadurch gekennzeichnet,**
**dass** als Werkstückparameter Dimensionen und/oder Toleranzen des Werkstücks vor, während und/oder nach der Bearbeitung erfasst werden.

4. Verfahren nach einem der Ansprüche 1 bis 3,
**dadurch gekennzeichnet,**
**dass** anhand des ermittelten Datensatzes ein Wert zur Umformbarkeit des Materiales beziehungsweise dem Materialfließverhalten des Werkstücks bestimmt wird.

5. Verfahren nach einem der Ansprüche 1 bis 4,
**dadurch gekennzeichnet,**
**dass** der Datensatz mit in einem Speicher hinterlegten Datensätzen verglichen wird.

6. Verfahren nach Anspruch 5,
**dadurch gekennzeichnet,**
**dass** die Steuerung anhand eines hinterlegten und ausgewählten Datensatzes einen oder mehrere Parameter bei der durchzuführenden Umformung verändert.

7. Verfahren nach einem der Ansprüche 1 bis 6,
**dadurch gekennzeichnet,**
**dass** durch die Steuerung eine Optimierung unter ökonomischen Gesichtspunkten, hinsichtlich Werkstücktoleranzen, Bearbeitungszeit, Energieverbrauch und/oder Verschleiß angestrebt wird.

8. Verfahren nach einem der Ansprüche 1 bis 7,
**dadurch gekennzeichnet,**
**dass** durch den Bediener, durch einen Datensatz und/oder durch die Steuerung für die Parameter minimale und/oder maximale Grenzwerte festgelegt werden, wobei die inkrementale Umformung durch die Steuerung so gesteuert wird, dass die vorgegebenen Grenzwerte nicht überschritten werden.

9. Verfahren nach einem der Ansprüche 1 bis 8,
**dadurch gekennzeichnet,**
**dass** die Parameter zu einer Prozessoptimierung innerhalb der vorgegebenen Grenzwerte durch die Steuerung abgewandelt werden.

10. Verfahren nach einem der Ansprüche 1 bis 9,
**dadurch gekennzeichnet,**
**dass** neue ermittelte Datensätze der Prozessoptimierung in einem Speicher der Steuerung hinterlegt werden.

11. Verfahren nach einem der Ansprüche 1 bis 10,
**dadurch gekennzeichnet,**
**dass** die Steuerung geänderte Prozessabläufe ermittelt und diese einen Nutzer vorschlägt oder automatisch einsetzt.

12. Verfahren nach einem der Ansprüche 1 bis 11,
**dadurch gekennzeichnet,**
**dass** die Maschinenparameter in einer ersten Steuerung überwacht werden und dass mindestens eine weitere Steuerung die Überwachung von weiteren Maschinen und/oder Prozessparametern übernimmt, diese auswertet und Stellgrößen an die erste Steuerung zur Änderung der Maschinenparameter beziehungsweise zur Optimierung des Prozesses übermittelt.

13. Verfahren nach einem der Ansprüche 1 bis 12,
**dadurch gekennzeichnet,**
**dass** das Werkstück, die mindestens eine Umformrolle, ein Werkzeug und/oder weitere Vorrichtungskomponenten mit einer Kodierung und/oder einem Datenspeicher versehen sind, deren Informationen gelesen und dem ermittelten Datensatz zugeordnet werden.

14. Vorrichtung zum inkrementellen Umformen eines metallischen Werkstücks, nach einem Verfahren nach einem der Ansprüche 1 bis 13, mit
- mindestens einer Spindel, an welcher das Werkstück einspannbar ist, und
- mindestens einem Spindelantrieb, mit welchem die mindestens eine Spindel mit dem Werkstück und/oder mindestens eine Umformrolle relativ zum Werkstück in Rotation versetzbar ist,
- wobei die mindestens eine Umformrolle mittels mindestens eines Stellantriebes radial und/oder axial relativ an das rotierende Werkstück zustellbar ist, bei welcher
- eine computer-basierte Steuerung vorgesehen ist, welche über Sensoren mehrere Maschinenparameter erfasst, welche mindestens eine Drehzahl der Spindel, eine Position der Umformrolle sowie Umformkräfte und/oder eine Zustellgeschwindigkeit der Umformrolle umfasst,
wobei,
- durch die Steuerung weiterhin Prozessparameter und/oder Werkstückparameter erfassbar sind,
- die Parameter weg- und/oder zeitabhängig erfasst werden,
- die Steuerung zum Erstellen mindestens eines Datensatzes ausgebildet ist, bei dem die Maschinenparameter den Prozess- und/oder Werkstückparametern zugeordnet werden,
- durch die Steuerung Verschleißzustände ermittelt und prognostiziert werden und
- die Steuerung Wartungstermine vorschlägt und/oder vorgibt.

## Claims

1. Method for the incremental forming of a metal workpiece, with
- at least one spindle, on which the workpiece is clamped,
and
- at least one spindle drive, with which the at least one spindle with the workpiece and/or at least one forming roller is set into rotation relative to the workpiece,
- wherein by means of at least one actuating drive the at least one forming roller is fed to the rotating workpiece radially and/or axially relative thereto, in which
- a computer-based control is provided, which, via sensors, detects several machine parameters which comprise at least one rotational speed of the spindle, a position of the forming roller as well as forming forces and/or a feed speed of the forming roller,
wherein
- by the control process parameters and/or workpiece parameters are furthermore detected,
- the parameters are detected in a path- and/or time-dependent manner,
- the control produces at least one dataset, in which the machine parameters are assigned to the process and/or workpiece parameters,
- by the control states of wear are established and/or prognosed, and
- the control suggests and/or presets maintenance dates.

2. Method according to claim 1,
**characterized in that**
as process parameters the processing time, the forming time, an energy consumption, a process force, a temperature and/or wear are detected.

3. Method according to claim 1 or 2,
**characterized in that**
as workpiece parameters dimensions and/or tolerances of the workpiece are detected before, during and/or after processing.

4. Method according to any one of claims 1 to 3,
**characterized in that**
on the basis of the established dataset a value on the formability of the material or the material flow behavior of the workpiece is determined.

5. Method according to any one of claims 1 to 4,
**characterized in that**
the dataset is compared with datasets stored in a memory.

6. Method according to claim 5,
**characterized in that**
on the basis of a stored and selected dataset the control alters one or several parameters in the forming to be carried out.

7. Method according to any one of claims 1 to 6,
**characterized in that**
by the control an optimization under economical aspects, regarding workpiece tolerances, processing time, energy consumption and/or wear is aimed for.

8. Method according to any one of claims 1 to 7,
**characterized in that**
minimum and/or maximum limit values are laid down for the parameters by the operator, by a dataset and/or by the control,
wherein the incremental forming is controlled in such a manner by the control that the preset limit values are not exceeded.

9. Method according to any one of claims 1 to 8,
**characterized in that**
for process optimization the parameters are modified within the preset limit values by the control.

10. Method according to any one of claims 1 to 9,
**characterized in that**
newly established datasets of the process optimization are stored in a memory of the control.

11. Method according to any one of claims 1 to 10,
**characterized in that**
the control establishes altered process sequences and suggests these to a user or installs them automatically.

12. Method according to any one of claims 1 to 11,
**characterized in that**
the machine parameters are monitored in a first control and
**in that** at least one further control assumes the monitoring of further machine and/or process parameters, evaluates these and transmits actuating variables to the first control for alteration of the machine parameters or for optimization of the process.

13. Method according to any one of claims 1 to 12,
**characterized in that**
the workpiece, the at least one forming roller, a tool and/or further device components are provided with a coding and/or a data memory, the information of which are read and assigned to the established dataset.

14. Device for the incremental forming of a metal workpiece, pursuant to a method according to any one of claims 1 to 13, with
- at least one spindle, on which the workpiece can be clamped,
and
- at least one spindle drive, with which the at least one spindle with the workpiece and/or at least one forming roller can be set into rotation relative to the workpiece,
- wherein by means of at least one actuating drive the at least one forming roller can be fed to the rotating workpiece radially and/or axially relative thereto,
in which
- a computer-based control is provided, which, via sensors, detects several machine parameters which comprise at least one rotational speed of the spindle, a position of the forming roller as well as forming forces and/or a feed speed of the forming roller,
wherein
- by the control process parameters and/or workpiece parameters can furthermore be detected,
- the parameters are detected in a path- and/or time-dependent manner,
- the control is designed for producing at least one dataset, in which the machine parameters are assigned to the process and/or workpiece parameters,
- by the control states of wear are established and/or prognosed, and
- the control suggests and/or presets maintenance dates.

## Revendications

1. Procédé de façonnage incrémentiel d'une pièce usinée métallique, avec
- au moins une broche, sur laquelle la pièce usinée est serrée, et
- au moins un entraînement de broche, avec lequel l'au moins une broche avec la pièce usinée et/ou au moins un rouleau de façonnage est mise en rotation par rapport à la pièce usinée,
- dans lequel l'au moins un rouleau de façonnage est approché radialement et/ou axialement par rapport à la pièce usinée en rotation au moyen d'au moins un servomoteur,
au sein duquel
- une commande informatique est prévue, laquelle détecte plusieurs paramètres machine par le biais de capteurs, lesquels comprennent au moins une vitesse de rotation de la broche, une position du rouleau de façonnage ainsi que des forces de façonnage et/ou une vitesse d'approche du rouleau de façonnage,
- des paramètres de processus et/ou paramètres de pièce usinée sont détectés en outre par la commande,
- les paramètres sont détectés en fonction du trajet et/ou du temps,
- la commande crée au moins un jeu de données, au sein duquel les paramètres machine sont associés aux paramètres de processus et/ou paramètres de pièce usinée,
- des états d'usure sont déterminés et/ou pronostiqués par la commande, et
- la commande propose et/ou prédéfinit des dates de maintenance.

2. Procédé selon la revendication 1,
**caractérisé en ce que**
le temps de traitement, le temps de façonnage, une consommation d'énergie, une force de processus, une température et/ou une usure sont détectés en tant que paramètres de processus.

3. Procédé selon la revendication 1 ou 2,
**caractérisé en ce que**
des dimensions et/ou tolérances de la pièce usinée sont détectées en tant que paramètres de pièce usinée avant, pendant et/ou après le traitement.

4. Procédé selon l'une des revendications 1 à 3,
**caractérisé en ce que**
une valeur d'aptitude au façonnage du matériau respectivement de comportement d'écoulement du matériau de la pièce usinée est déterminée à l'aide du jeu de données déterminé.

5. Procédé selon l'une des revendications 1 à 4,
**caractérisé en ce que**
le jeu de données est comparé avec des jeux de données déposés dans une mémoire.

6. Procédé selon la revendication 5,
**caractérisé en ce que**
la commande modifie un ou plusieurs paramètres lors du façonnage à effectuer à l'aide d'un jeu de données déposé et sélectionné.

7. Procédé selon l'une des revendications 1 à 6,
**caractérisé en ce que**
une optimisation du point de vue économique, en ce qui concerne les tolérances de la pièce usinée, le temps de traitement, la consommation d'énergie et/ou l'usure est visée par la commande.

8. Procédé selon l'une des revendications 1 à 7,
**caractérisé en ce que**
des valeurs limites minimum et/ou maximum sont fixées pour les paramètres par l'opérateur, par un jeu de données et/ou par la commande, dans lequel le façonnage incrémentiel est commandé par la commande de sorte que les valeurs limites prédéfinies ne soient pas dépassées.

9. Procédé selon l'une des revendications 1 à 8,
**caractérisé en ce que**
les paramètres sont transformés en une optimisation de processus à l'intérieur des valeurs limites prédéfinies par la commande.

10. Procédé selon l'une des revendications 1 à 9,
**caractérisé en ce que**
de nouveaux jeux de données déterminés de l'optimisation de processus sont déposés dans une mémoire de la commande.

11. Procédé selon l'une des revendications 1 à 10,
**caractérisé en ce que**
la commande détermine des déroulements de processus modifiés et les propose à un utilisateur ou les utilise automatiquement.

12. Procédé selon l'une des revendications 1 à 11,
**caractérisé en ce que**
les paramètres machine sont surveillés dans une première commande, et
**en ce qu'**au moins une autre commande prend en charge la surveillance d'autres machines et/ou paramètres de processus, les évalue et transmet des grandeurs de réglage à la première commande pour la modification des paramètres machine respectivement pour l'optimisation du processus.

13. Procédé selon l'une des revendications 1 à 12,
**caractérisé en ce que**
la pièce usinée, l'au moins un rouleau de façonnage, un outil et/ou d'autres composants de dispositif sont dotés d'un codage et/ou d'une mémoire de données, dont les informations sont lues et associées au jeu de données déterminé.

14. Dispositif de façonnage incrémentiel d'une pièce usinée métallique par un procédé selon l'une des revendications 1 à 13, avec
- au moins une broche, sur laquelle la pièce usinée peut être serrée, et
- au moins un entraînement de broche, avec lequel l'au moins une broche avec la pièce usinée et/ou au moins un rouleau de façonnage peut être mise en rotation par rapport à la pièce usinée,
- dans lequel l'au moins un rouleau de façonnage peut être approché radialement et/ou axialement par rapport à la pièce usinée rotative au moyen d'au moins un servomoteur, au sein duquel
- une commande informatique est prévue, laquelle détecte plusieurs paramètres machine par le biais de capteurs, laquelle comprend au moins une vitesse de rotation de la broche, une position du rouleau de façonnage ainsi que des forces de façonnage et/ou une vitesse d'approche du rouleau de façonnage,
- des paramètres de processus et/ou paramètres de pièce usinée peuvent être détectés en outre par la commande,
- les paramètres sont détectés en fonction du trajet et/ou du temps,
- la commande est conçue pour créer au moins un jeu de données, au sein duquel les paramètres machine sont associés aux paramètres de processus et/ou paramètres de pièce usinée,
- des états d'usure sont déterminés et/ou pronostiqués par la commande, et
- la commande propose et/ou prédéfinit des dates de maintenance.
